# EUROPEAN PATENT APPLICATION

(11) **EP 1 503 595 A2**
(43) Date of publication of application: **02.02.2005**
(21) Application number: 04015638.2
(22) Date of filing: 02.07.2004
(51) Int. Cl.: H04N 7/26

(54) **Video codec system with real-time complexity adaptation**

(30) Priority: 31.07.2003 US 631155
(71) Applicant: SEIKO EPSON CORPORATION, Tokyo 163 (JP)
(72) Inventor: Ratnakar, Viresh, Sunnyvale California 94086 (US); Chen, William, Foster City California 94404 (US)
(74) Representative: Grünecker, Kinkeldey, Stockmair & Schwanhäusser Anwaltssozietät

(57) **Abstract**

An encoder/decoder (codec) is configured to cause the coding/decoding algorithms used by the codec to dynamically adapt according to the available computational resources in response to actual complexity measurements performed at run-time. In a system in which multiple video codecs have to operate simultaneously in real-time, sharing the system's available resources, this invention provides a way to increase the number of simultaneous codecs that can co-exist. The principles of the invention are also applicable to an individual encoder and an individual decoder.

## Description

### BACKGROUND OF THE INVENTION

### Field of the Invention

The present invention relates to video encoding and decoding. More particularly, the invention pertains to a codec (encoder/decoder), an encoder, and a decoder in which the algorithin(s) adapt to available computational resources in response to complexity measurement performed at run-time. The invention further relates to a method for controlling the manner in which the algorithm(s) so adapt and a program in which the method can be embodied.

### Description of the Related Art

As a tool for providing real-time transmission of video and sound between two or more sites, video conferencing is widely used in modern business world, and is becoming more popular in other aspects of life as well. Such transmission may be accompanied by the transmission of graphics and other data, depending on the environment in which the system is employed. Most video conferences involve two-way, interactive exchanges, although one-way broadcasts are sometimes used in educational settings. The overall quality of a video conference depends on a number of factors, including the quality of the data capture and display devices, the amount of bandwidth used, and the quality and capabilities of the video conferencing system's basic component: the codec (coder/decoder).

The codec includes the algorithms used to compress and decompress the video/image and sound data so that such data is easier for the processors to manage. Codecs define the video settings such as frame rate and size and the audio settings such as bits of quality. Most codecs only have rate-control. That is, such systems can adapt to available bandwidth. However, for a system (such as a video conferencing server) with multiple codecs using up shared computational resources, it is very important to be able to adaptively modify the complexity of the codecs. Some codecs have parameters for specifying the complexity, but do not have complexity parameters grouped into algorithm settings. Moreover, conventional codecs do not measure run-time complexity and change algorithm settings automatically in response to them.

### OBJECTS AND SUMMARY OF THE INVENTION

### Objects of the Invention

It is therefore an object of the present invention to overcome these shortcomings.

It is another object of this invention to provide a codec (encoder/decoder) that is configured such that, during operation, one or more of its algorithms change operating setting according to available computational resources in response to actual complexity measurements performed at run-time.

It is further object of this invention to provide a system in which multiple video codecs (encoder/decoder) have to operate simultaneously in real-time, sharing the system's available resources, this invention provides a way to increase the number of simultaneous codecs that can co-exist.

### Summary of the Invention

According to one aspect of the invention, a codec (encoder/decoder) with real-time complexity adaptation is provided. Such. a codec comprises both an encoder and a decoder. The encoder includes a first plurality of variable parameters that are used to specify different settings at which a coding algorithm applied to incoming video data operates. Similarly, the decoder includes a second plurality of variable parameters that are used to specify different settings at which a decoding algorithm applied to outgoing video data operates. In accordance with this aspect of the invention, the codec is configured such that, during operation, at least one of the coding algorithm and decoding algorithm is able to dynamically change its operating setting according to available computational resources in response to actual complexity measurements performed at run-time.

Preferably, the first plurality of variable parameters that are used to specify the different settings at which the coding algorithm operates include motion-search window, motion-search algorithm, motion-search sum-of-absolute-differences measurement sub-sampling factor, and motion-search half-pel refinement none/*x*-only/*x*-and-*y*.

Preferably, the second plurality of variable parameters that are used to specify the different settings at which the decoding algorithm operates include IDCT, chroma-skipping, and frame-display skipping.

In accordance with another aspect of the invention, a video conferencing system comprises a plurality of codecs configured to share the system's resources. Each codec comprises an encoder that includes an associated set of parameters that are used to define different settings at which an associated coding algorithm applied to incoming video data operates, and a decoder that includes an associated set of parameters that are used to define different settings at which an associated decoding algorithm applied to outgoing video data operates. In accordance with this aspect of the invention, each of the codecs is configured such that its algorithms in use dynamically adapt their operating settings during operation according to available computational resources in response to actual complexity measurements performed at run-time.

According to a further aspect of the invention, a device for processing a video stream is provided. The device may be an encoder or decoder. In any case, such device includes a plurality of variable parameters that are used to specify different settings at which an algorithm applied to the video stream operates. In accordance with this aspect of the invention, the device is configured such that, during operation, the algorithm is able to dynamically change its operating setting according to available computational resources in response to actual complexity measurements performed at run-time.

If the device comprises an encoder, preferably the algorithm comprises a coding algorithm. Also, the plurality of variable parameters that are used to specify the different settings at which the coding algorithm operates include motion-search window, motion-search algorithm, motion-search sum-of-absolute-differences measurement sub-sampling factor, and motion-search half-pel refinement none/*x*-only/*x*-and-*y*.

If the device comprises a decoder, preferably the algorithm comprises a decoding algorithm. Also, the plurality of variable parameters that are used to specify the different settings at which the decoding algorithm operates include IDCT, chroma-skipping, and frame-display skipping.

In another aspect, the invention involves a method for processing a video stream, comprising the steps of: measuring the real-time used by an algorithm for a previous frame; averaging the measured real-time used for the previous frame with a previously measured real-time for the algorithm to obtain a weighted average time value; comparing the weighted average time value with a target range; and controlling a setting of the algorithm. The controlling step is accomplished by downgrading the algorithm setting, if the weighted average time value is greater than an upper bound of the target range, and upgrading the algorithm setting, if the weighted average time value is less than a lower bound of the target range and has been so over a predetermined number of frames.

Preferably, the controlling a setting of the algorithm further comprises periodically upgrading the algorithm setting, if the weighted average time value is between the lower bound of the target range and a target value within the target range. More preferably, the step of upgrading the algorithm periodically is also carried out, if the weighted average time value is less than the lower bound of the target range but has not been so for at least the predetermined number of frames.

In accordance with further aspects of the invention, the above-described method or any of the steps thereof may be embodied in a program of instructions (e.g., software) which may be stored on, or conveyed to, a computer or other processor-controlled device for execution. Alternatively, the method or any of the steps thereof may be implemented using functionally equivalent hardware (e.g., ASIC, digital signal processing circuitry, etc.) or a combination of software and hardware.

Other objects and attainments together with a fuller understanding of the invention will become apparent and appreciated by referring to the following description and claims taken in conjunction with the accompanying drawings.

### BRIEF DESCRIPTION OF THE DRAWINGS

Fig. 1 is a block diagram of an exemplary video conferencing system in which a codec (encoder/decoder) is installed at each site.
Fig. 2 is a block diagram of an encoder configured in accordance with aspects of the invention.
Fig. 3 is a block diagram of a decoder configured in accordance with aspects of the invention.
Fig. 4 is a flow diagram describing the manner in which the algorithm(s) of the codec, encoder and/or decoder adapt (i.e., change setting) in response to actual complexity measurements performed at run-time.

### DESCRIPTION OF THE PREFERRED EMBODIMENTS

The invention enables an encoder, decoder, and/or encoder/decoder (codec) to dynamically adapt its algorithms according to the available computational resources. Moreover, the adaptation is done in response to actual measurements performed at run-time, rather than off-line line tables for various platforms. More specifically, such device is configured to automatically changing its operating setting according to available computational resources in response to actual complexity measurements performed at run-time. In a system in which multiple codecs are operating simultaneously in real-time, sharing the system's available resources, the invention advantageously provides a way to increase the number of such simultaneous codecs that can co-exist.

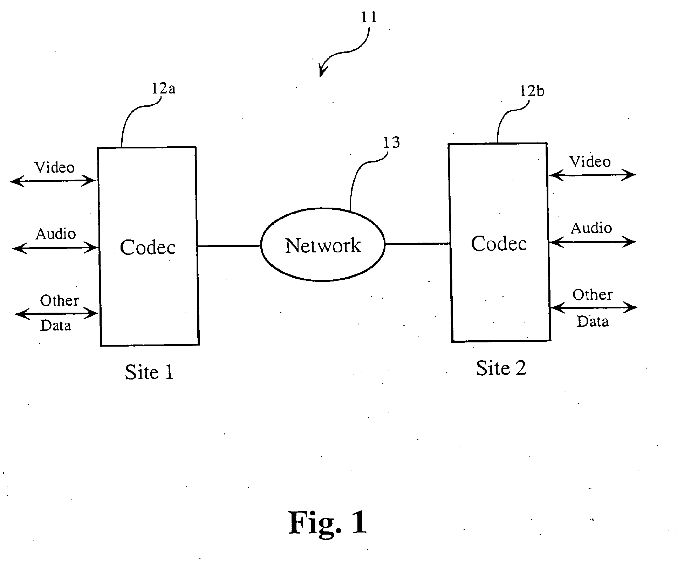

The data flow of an exemplary video conferencing system 11 is shown schematically in Fig. 1. The illustrated system includes only two sites, but that is by way of example only. The system may include additional sites, subject to the system's available resources. A codec 12a/12b is installed at each videoconferencing site, along with other devices that enable the participant at that site to see and communicate with the other participants. Such other devices (not shown) typically include camera(s), microphone(s), monitor(s), and speaker(s). The codecs 12a/12b are in communication with one another through a network 13.

The codec 12 digitizes and compresses video and audio signals, as well as any other data to be transmitted, multiplexes those signals, and delivers the combined signal (e.g., a baseband digital signal) to the network 13 for transmission to other codecs 12 in the system 11. Each codec 12 is also configured to accept a similarly encoded signal from the network 13, demultiplex the received signal, decompress the video, audio and any other data, and provide analog video and audio outputs and an output for any other received data. Thus, each codec 12 performs the functions of both an encoder and a decoder.

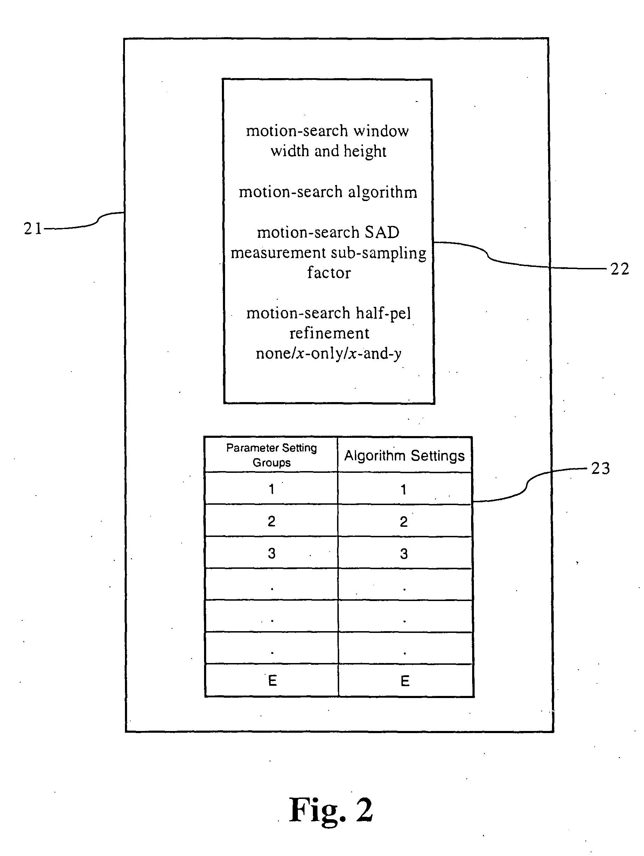

Referring now to Fig. 2, an encoder 21 is shown. The encoder 21 may be part of a codec such as that shown in Fig. 1, or it may be a stand alone module. In any case, the encoder 21 includes parameters 22 which are used to specify different settings at which the encoder's coding (e.g., compression) algorithm operates. In accordance with aspects of the invention, each encoder 21 is implemented so as to be operable at algorithm settings 1 to E (with E being a small number such as 10). The various intermediate algorithm settings are obtained by varying one or more parameters including:
1. Motion-search window width and height,
2. Motion-search algorithm,
3. Motion-search SAD (sum-of absolute-differences) measurement sub-sampling factor, and
4. Motion-search half-pel refinement none/*x*-only/*x*-and-*y*.

During an off-line design phase, the particular parameter choices corresponding to each of the E algorithm settings are determined by performing measurements on a large set of representative video streams and identifying the upper envelope of the quality (PSNR) vs. complexity (running-time) curve and choosing E roughly equi-spaced (along the complexity axis) points. Thus, after this off-line design phase, the E algorithm settings are selected to provide a smooth transition across the operating range of the encoder 21, and each algorithm setting 1 to E is correlated with a particular group of parameter settings from which that algorithm setting is obtained, as is schematically shown by table 23 in encoder 21.

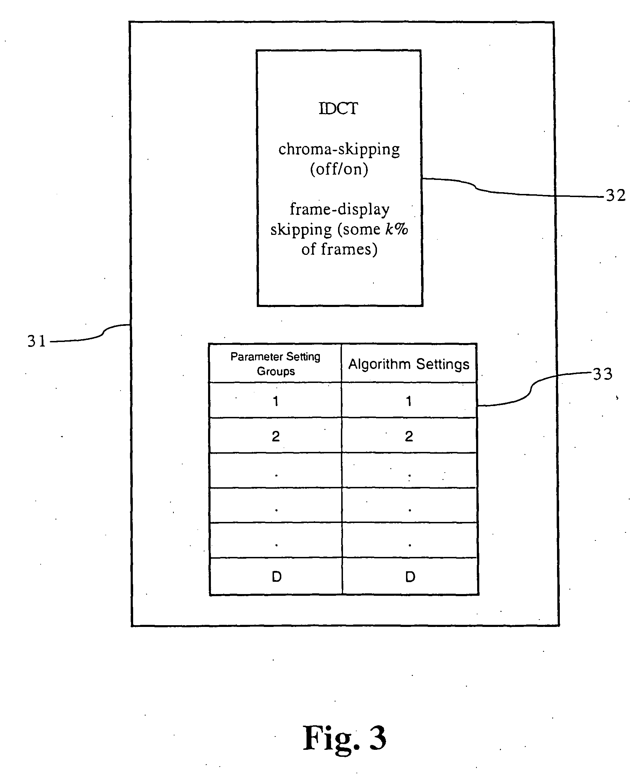

A decoder 31, which is similarly implemented, is shown in Fig. 3. Each decoder 31 is implemented so as to be operable at decoding (e.g., decompression) algorithm settings 1 to D (with D being a small number such as 5). For the decoder 31, variable parameters 32 which are used to specify different settings at which the decoder's decoding (e.g., decompression) algorithm operates include:
1. Inverse Discrete Cosine Transform (IDCT): very approximate, approximate or actual,
2. Chroma-skipping (off or on), and
3. Frame-display skipping (some *k*% of frames).
Again, the parameter choices for D different settings are determined off-line. The different algorithm settings are selected to provide a smooth transition across the operating range of the decoder 31, and each algorithm setting 1 to D is correlated with a particular group of parameter settings from which that algorithm setting is obtained, as is schematically shown by table 33 in decoder 31.

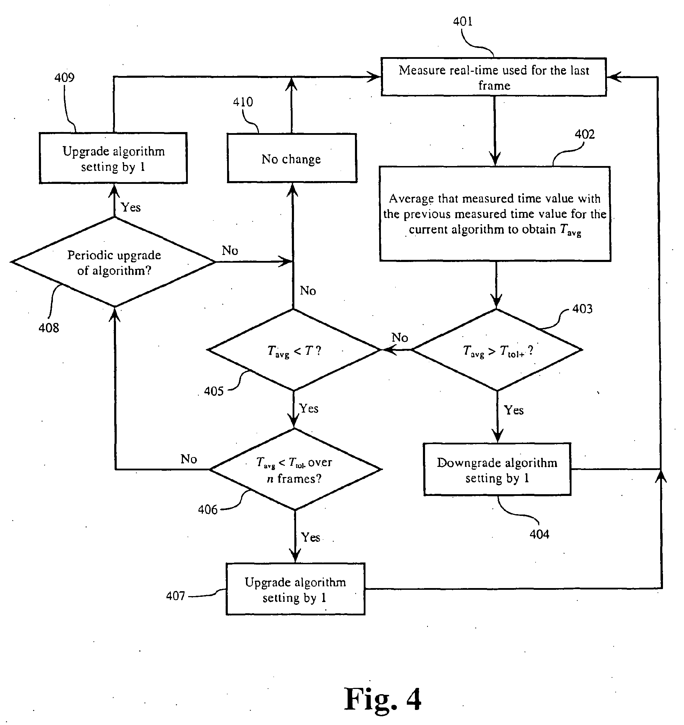

The manner in which each codec dynamically adjusts its algorithm settings is described next with reference to the flow diagram of Fig. 4. At run-time, each encoder and each decoder measures the time (real-time) used for the last frame (step 401). This time is averaged with the previous measured time value for the current algorithm setting (step 402); thus, the value that gets used (*T*_{avg}) is the weighted average over the entire history for that algorithm setting, with the most recent measurement carrying a weight of 0.5, the one before that of 0.25, and so on. This time value *T*_{aνg} is then compared with a target time value *T*. The target time value *T* is either specified by the system (based upon the total number of concurrent video streams and other load), or is heuristically set to be half the value determined by the stream's frames-per-second speed. If the measured value *T*_{avg} is greater than the target value *T* plus a tolerance *t*+ (the additive sum represented by *T*ₜₒₗ₊), then the algorithm setting is downgraded by 1. If the measured value *T*_{avg} is less than the target value *T* then typically no change is made, with the following exceptions: (a) if the measured value *T*_{avg} is lower than some extra tolerance *t*- below the target value, the lower boundary represented by *T*ₜₒₗ₋, and is consistently so over a certain number of frames, then the algorithm is upgraded by 1; and (b) periodically, the algorithm setting is upgraded by 1 to test the waters, as it were, to check if possibly the computational load on the system has come down and a higher setting is possible. Tolerance values *t*+ and *t-* may be a certain percentage of the target *T*. A typical choice would be a small tolerance on the high side, say 2% above *T*, and a moderate tolerance on the low end, say 10% below *T*. Such a setting is conservative in the sense that the algorithm is not upgraded aggressively, but is downgraded almost as soon as the running time overshoots the target.

Thus, one way in which such control can be realized is described below. Continuing with the flow diagram of Fig. 4, in step 403, it is determined if *T*_{aνg} > *T*ₜₒₗ₊. If so, then the algorithm setting is downgraded by 1 in step 404. If not, it is next determined in step 405 if *T*_{aνg} < *T.* If so, it is then determined in step 406 whether *T*_{aνg} < *T*ₜₒₗ- and has been so consistently over a predetermined number of frames n, where n is typically in the range of about 5 to about 100, bearing in mind that smaller values make the system more sensitive to change. If the decision in step 406 is "yes," the algorithm setting is upgraded by 1 in step 407. If the decision in step 406 is "no," which means that *T*_{avg} is either between *T*ₜₒₗ₋ and *T*, or is less than *T*ₜₒₗ₋ but has not been consistently so over *n* frames, then it is determined in step 408 if a periodic upgrade of the algorithm setting is in order. If so, the algorithm setting is upgraded by 1 in step 409. If not, the algorithm setting remains unchanged in step 410. The algorithm setting also remains unchanged if *T*_{avg} is between *T* and *T*ₜₒₗ₊ (step 405 returns "no"). After the algorithm setting is either downgraded (step 404), upgraded (step 407 or 409), or left unchanged (step 410), the control process loops back to step 401 where another real-time measurement is made. The process continues during run-time until there are no more frames to consider.

As will be readily apparent from the foregoing description, the codec, as well as the individual encoder and decoder, of this invention provide a number of advantages over the prior art. The codec of the present invention offers much more than just rate-control, i.e., the ability to adapt to available bandwidth. The codec of this invention is also advantageously configured to adaptively modify its complexity, which is a very important feature for codecs in a system (such as a video conferencing server) with multiple codecs using up shared computational resources. Moreover, the codec of the present invention not only has parameters for specifying the complexity, but also has such complexity parameters grouped into algorithm settings which automatically change in response to actual measured run-time complexity as described above. Actual measurements at run-time do away with inaccurate estimates based upon cycle-counts that fail to take into account real-time variations in systems owing to varying load, multithreading, IO, number of clients, etc.

The functions of the codec, encoder and decoder of this invention may conveniently implemented in software. An equivalent hardware implementation may be obtained using application specific integrated circuits ASICs, digital signal processing circuitry, or the like.

With these implementation alternatives in mind, it is to be understood that the figures and accompanying description provide the functional information one skilled in the art would require to write program code (i.e., software) or to fabricate circuits (i.e., hardware) to perform the processing required. Accordingly, the claim language "machine-readable medium" further includes hardware having a program of instructions hardwired thereon.

While the invention has been described in conjunction with several specific embodiments, many further alternatives, modifications, variations and applications will be apparent to those skilled in the art that in light of the foregoing description. Thus, the invention described herein is intended to embrace all such alternatives, modifications, variations and applications as may fall within the spirit and scope of the appended claims.

## Claims

1. A codec, comprising:
an encoder that includes a first plurality of variable parameters that are used to specify different settings at which a coding algorithm applied to incoming video data operates; and
a decoder that includes a second plurality of variable parameters that are used to specify different settings at which a decoding algorithm applied to outgoing video data operates;
wherein the codec is configured such that, during operation, at least one of the coding algorithm and decoding algorithm is able to dynamically change its operating setting according to available computational resources in response to actual complexity measurements performed at run-time.

2. A codec as recited in claim 1, wherein the first plurality of variable parameters that are used to specify the different settings at which the coding algorithm operates include
motion-search window,
motion-search algorithm,
motion-search sum-of absolute-differences measurement sub-sampling factor, and
motion-search half-pel refinement none/x-only/x-and-y.

3. A codec as recited in claim 1, wherein the second plurality of variable parameters that are used to specify the different settings at which the decoding algorithm operates include
IDCT,
chroma-skipping, and
frame-display skipping.

4. A video conferencing system, comprising:
a plurality of codecs configured to share the system's resources, each codec comprising
an encoder that includes an associated set of parameters that are used to define different settings at which an associated coding algorithm applied to incoming video data operates, and
a decoder that includes an associated set of parameters that are used to define different settings at which an associated decoding algorithm applied to outgoing video data operates;
wherein each of the codecs is configured such that its algorithms in use dynamically adapt their operating settings during operation according to available computational resources in response to actual complexity measurements performed at run-time.

5. A device for processing a video stream, comprising:
a plurality of variable parameters that are used to specify different settings at which an algorithm applied to the video stream operates;
wherein the device is configured such that, during operation, the algorithm is able to dynamically change its operating setting according to available computational resources in response to actual complexity measurements performed at run-time.

6. A device as recited in claim 5, wherein the device comprises an encoder, and the algorithm comprises a coding algorithm.

7. A device as recited in claim 6, wherein the plurality of variable parameters that are used to specify the different settings at which the coding algorithm operates include
motion-search window,
motion-search algorithm,
motion-search sum-of-absolute-differences measurement sub-sampling factor, and
motion-search half-pel refinement none/x-only/x-and-y.

8. A device as recited in claim 5, wherein the device comprises a decoder, and the algorithm comprises a decoding algorithm.

9. A device as recited in claim 8, wherein the plurality of variable parameters that are used to specify the different settings at which the decoding algorithm operates include
IDCT,
chroma-skipping, and
frame-display skipping.

10. A method for processing a video stream, comprising the steps of:
measuring the real-time used by an algorithm for a previous frame;
averaging the measured real-time used for the previous frame with a previously measured real-time for the algorithm to obtain a weighted average time value;
comparing the weighted average time value with a target range; and
controlling a setting of the algorithm by:
downgrading the algorithm setting, if the weighted average time value is greater than an upper bound of the target range, and
upgrading the algorithm setting, if the weighted average time value is less than a lower bound of the target range and has been so over a predetermined number of frames.

11. A method as recited in claim 10, wherein the controlling a setting of the algorithm further comprises:
periodically upgrading the algorithm setting, if the weighted average time value is between the lower bound of the target range and a target value within the target range.

12. A method as recited in claim 11, wherein the step of upgrading the algorithm periodically is also carried out, if the weighted average time value is less than the lower bound of the target range but has not been so for at least the predetermined number of frames.

13. A machine-readable medium embodying a program of instructions for directing a device to process a video stream, the program of instructions comprising:
instructions for measuring the real-time used by an algorithm for a previous frame;
instructions for averaging the measured real-time used for the previous frame with a previously measured real-time for the algorithm to obtain a weighted average time value;
instructions for comparing the weighted average time value with a target range; and
instructions for controlling a setting of the algorithm including:
instructions' for downgrading the algorithm setting, if the weighted average time value is greater than an upper bound of the target range, and
instructions for upgrading the algorithm setting, if the weighted average time value is less than a lower bound of the target range and has been so over a predetermined number of frames.

14. A machine-readable medium as recited in claim 13, wherein the instructions for controlling a setting of the algorithm further comprises:
instructions for periodically upgrading the algorithm setting, if the weighted average time value is between the lower bound of the target range and a target value within the target range.

15. A machine-readable medium as recited in claim 14, wherein the instructions for upgrading the algorithm periodically is also executed, if the weighted average time value is less than the lower bound of the target range but has not been so for at least the predetermined number of frames.
